# FASCICULE DE BREVET EUROPEEN

(11) **EP 2 738 453 B1**
(45) Date de publication et mention de la délivrance du brevet: **12.08.2026**
(21) Numéro de dépôt: 13193419.2
(22) Date de dépôt: 19.11.2013
(51) Int. Cl.: F21S 43/14, F21S 43/239, F21S 43/243, F21S 43/249, F21V 8/00

(54) **GUIDE DE LUMIÈRE POUR UN DISPOSITIF OPTIQUE, NOTAMMENT D'ÉCLAIRAGE ET/OU DE SIGNALISATION**
Lichtwellenleiter für eine optische Vorrichtung, insbesondere zur Beleuchtung und/oder Signalisierung
Light guide for an optical device, in particular for lighting and/or signalling

(30) Priorité: 29.11.2012 FR 1261426
(43) Date de publication de la demande: 04.06.2014
(73) Titulaire: VALEO VISION, 93012 Bobigny Cedex (FR)
(72) Inventeur: Giraud, Sylvain, 72200 LA FLECHE (FR)
(74) Mandataire: Valeo Visibility

(56) Documents cités:
- EP-A1- 2 784 379
- EP-A2- 1 718 084
- EP-A2- 2 363 738
- EP-A2- 2 607 774
- WO-A1-2011/051563
- JP-A- 2007 335 312
- JP-A- H11 260 136
- US-A1- 2010 091 498
- US-A1- 2012 250 308

## Description

L'invention concerne un guide de lumière pour un dispositif optique, notamment un dispositif d'éclairage ou de signalisation ou d'éclairage intérieur.

Il est connu de doter les dispositifs d'éclairage et/ou de signalisation d'un guide de lumière ayant la forme d'une nappe de forme non plane et de diodes électroluminescentes dont les rayons lumineux sont guidés par le guide de lumière jusqu'à la sortie du dispositif. On crée ainsi un faisceau de lumière à l'aide d'un guide de lumière dont l'aspect allumé est courbé.

Afin de diriger le faisceau de lumière émis par le guide selon certaines directions, il est connu de doter de tels guide de sous-ensembles de collimation apte à recevoir de la lumière émise par une diode électroluminescente et à diriger une partie de cette lumière vers la sortie du dispositif.

Or, il est nécessaire d'adapter la forme de tels sous-ensembles à la courbure de la nappe, par exemple en courbant les sous-ensembles.

Cette adaptation entraine l'inconvénient de dégrader l'aspect allumé du guide de lumière, qui peut apparaitre hétérogène, voire discontinu le long du profil courbe.

De plus, de tels sous-ensembles courbés sont compliqués à concevoir.

Un but de l'invention est de produire un guide de lumière permettant de pallier ces inconvénients.

Le document US 2010/0091498 A1 divulgue un guide de lumière pour l'éclairage.

L'invention a ainsi pour objet un guide de lumière pour un dispositif optique, notamment d'éclairage et/ou de signalisation comportant :
- au moins une portion de sortie de lumière présentant une face supérieure et une face inférieure reliées entre elles par une tranche de sortie de lumière,
- au moins un sous-ensemble de collimation apte à recevoir de la lumière émise par une source de lumière et à diriger au moins une partie de cette lumière vers la portion de sortie de lumière, le sous-ensemble de collimation présentant une face supérieure et une face inférieure reliées entre elles par une tranche, et
- une portion de raccord raccordant la portion de sortie de lumière au sous-ensemble, la portion de raccord présentant une face supérieure et une face inférieure,

où les faces inférieure et supérieure du sous-ensemble s'étendent sensiblement dans des plans parallèles entre eux, et en ce que la face supérieure de la portion de raccord et l'une au moins de la face supérieure du sous-ensemble de collimation et de la face supérieure de la portion de sortie de lumière se joignent en une arête,
la portion de sortie de lumière présentant une forme galbée , c'est-à-dire la face supérieure et/ ou la face inférieure de la portion de sortie est non entièrement contenue dans un plan.

Grâce à l'invention, il est possible de s'affranchir de toute déformation du sous-ensemble de collimation et par conséquent de conserver une répartition optimale des rayons lumineux vers la tranche de sortie de lumière et donc d'améliorer l'homogénéité du faisceau de lumière atteignant la face de sortie.

De plus, du fait de la planéité des faces supérieure et inférieure du sous-ensemble, le guide selon l'invention peut être produit simplement.

Selon un mode de réalisation de l'invention, lorsqu'un rayon lumineux arrive sur la face inférieure de la portion de raccord avec une direction d'incidence donnée, les faces supérieure et inférieure de la portion de raccord sont agencées de manière à réfléchir ce rayon, notamment par réflexion interne totale, vers la portion de sortie de lumière dans une direction de réflexion sensiblement parallèle à la direction d'incidence donnée.

On entend par direction d'incidence l'angle d'incidence du rayon sur la face inférieure de la portion de raccord et par direction de réflexion l'angle de réflexion du rayon sur la face supérieure de la portion de raccord. Grâce à cette caractéristique, les rayons de lumière se propageant dans le guide passent du sous-ensemble de collimation à la portion de sortie en conservant leur direction, malgré la courbure de la nappe. De cette façon, on améliore l'homogénéité du faisceau de lumière atteignant la face de sortie.

En variante, lorsqu'un rayon lumineux arrive sur la face supérieure de la portion de raccord avec une direction d'incidence donnée, les faces supérieure et inférieure de la portion de raccord sont agencées de manière à réfléchir ce rayon, notamment par réflexion interne totale, vers la portion de sortie de lumière dans une direction de réflexion sensiblement parallèle à la direction d'incidence donnée.

Avantageusement, la face supérieure de la portion de raccord et la face supérieure du sous-ensemble de collimation se joignent en une première arête, et la face supérieure de la portion de raccord et la face supérieure de la portion de sortie se joignent en une deuxième arête.

Le cas échéant, la première arête définit le sommet d'un angle formé par la face supérieure de la portion de raccord et la face supérieure du sous-ensemble de collimation. Préférentiellement, cet angle est compris entre 130° et 160°, voire est égal à 135°.

La deuxième arête définit le sommet d'un angle formé par la face supérieure de la portion de raccord et la face supérieure de la portion de sortie. Préférentiellement, cet angle est compris entre 130° et 160°, voire est égal à 135°.

Avantageusement, la première arête forme un segment de droite.

Avantageusement encore, la face supérieure de la portion de raccord est plane.

Selon une caractéristique de l'invention, la face inférieure de la portion de raccord et l'une au moins de la face inférieure du sous-ensemble de collimation et de la face inférieure de la portion de sortie de lumière se joignent en une arête.

Avantageusement, la face inférieure de la portion de raccord et la face inférieure du sous-ensemble de collimation se joignent en une troisième arête, et la face inférieure de la portion de raccord et la face inférieure de la portion de sortie se joignent en une quatrième arête.

Le cas échéant, la troisième arête définit le sommet d'un angle formé par la face inférieure de la portion de raccord et la face inférieure du sous-ensemble de collimation. Préférentiellement, cet angle est compris entre 130° et 160°, voire est égal à 135°.

La quatrième arête définit le sommet d'un angle formé par la face inférieure de la portion de raccord et la face inférieure de la portion de sortie. Préférentiellement, cet angle est compris entre 130° et 160°, voire est égal à 135°.

Avantageusement, la troisième arête forme un segment de droite.

Avantageusement encore, la face inférieure de la portion de raccord est plane.

Préférentiellement, les faces supérieure et inférieure de la portion de raccord sont parallèles entre elles.

Selon une caractéristique avantageuse de l'invention, la face supérieure de la portion de raccord recouvre exactement la face inférieure de la portion de raccord. Avantageusement, la face inférieure de la portion de raccord est, sur toute sa surface, en vis-à-vis de la face supérieure de la portion de raccord. Par exemple, il peut être prévu que la première arête et la troisième arête soient comprises dans un même plan perpendiculaire au sous-ensemble de collimation. Il peut être également prévu que la deuxième arête et la quatrième arête soient comprises dans un même cylindre défini par une génératrice translatant sur une directrice, la génératrice étant une droite perpendiculaire au sous-ensemble de collimation et la directrice étant la deuxième arête.

Dans un autre mode de réalisation de l'invention, la face supérieure de la portion de raccord est décalée par rapport à la face inférieure de la portion de raccord. La première arête et la troisième arête sont comprises dans un même plan incliné par rapport au sous-ensemble de collimation. La deuxième arête et la quatrième arête sont comprises dans un même cylindre défini par une génératrice translatant sur une directrice, la génératrice étant une droite sécante au sous-ensemble de collimation et la directrice étant la deuxième arête.

Le guide selon l'invention pourra en outre présenter, de manière facultative, au moins l'une des caractéristiques suivantes :
- la face inférieure du sous-ensemble de collimation est une face d'entrée de lumière apte à recevoir de la lumière émise par une source de lumière,
- le sous-ensemble de collimation comporte des moyens de collimation pour diriger au moins une partie de la lumière provenant de la face inférieure du sous-ensemble de collimation vers la portion de raccord,
- lorsque des rayons sont émis d'un point prédéterminé par rapport au guide, traversent la face d'entrée et arrivent sur ces moyens de collimation, les moyens de collimation sont agencés pour diriger, directement ou indirectement, une majeure partie, notamment la totalité de ces rayons vers la portion de raccord sous la forme d'un faisceau à rayons parallèles ou environ parallèles à plus ou moins 5° près. Autrement dit, la majeure partie, voir la totalité, des rayons émis d'un point prédéterminés, traversant la face d'entrée, arrivant sur les moyens de collimation sont dirigés de manière à être contenus dans des plans parallèles entre eux et la majeure partie, voire la totalité des rayons contenus dans un de ces plans sont parallèles entre eux. Cette caractéristique offre l'avantage de pouvoir diriger le faisceau de lumière sortant du guide dans une direction prédéterminée, par exemple pour répondre aux réglementations en vigueur,
- le guide comportant un axe optique, la direction des rayons du faisceau à rayons parallèles est sensiblement parallèle à l'axe optique du guide,
- les moyens de collimation comportent un coupleur agencé de manière à ce que, lorsque des rayons sont émis d'un point prédéterminé par rapport au guide, traversent la face d'entrée et arrivent sur ce coupleur, une partie de ces rayons sont réfléchis par le coupleur vers la portion de raccord et une autre partie de ces rayons sont réfléchis par le coupleur vers la tranche du sous-ensemble de collimation,
- la tranche du sous-ensemble de collimation est une face de réflexion présentant une section de forme parabolique dans un plan parallèle à la face supérieure du sous-ensemble, le foyer de cette section de forme parabolique étant disposé au niveau du coupleur. De cette manière, le coupleur transmet une partie de la lumière à la tranche du sous-ensemble qui la redirige, sous la forme d'un faisceau à rayons parallèles,
- la tranche du sous-ensemble de collimation présente une section de forme en V dans un plan perpendiculaire à la face supérieure du sous-ensemble et contenant l'axe optique, la tranche étant formée par deux surfaces formant entre elles un angle de 90°. Ainsi ces deux surfaces peuvent fonctionner en réflexion interne totale des rayons lumineux, ce qui permet de s'abstenir d'aluminer la tranche du sous-ensemble,
- la portion de sortie de lumière forme une nappe de guidage agencée pour guider vers la tranche de sortie de la lumière venant de la portion de raccord et se propageant dans la nappe, notamment par réflexion interne totale. Une nappe désigne un solide dont l'épaisseur, par exemple mesurée entre les faces supérieure et inférieure, est substantiellement plus faible que des dimensions, telles que la longueur ou la largeur, de ces faces supérieure et inférieure. La nappe de guidage est réalisée en un matériau transparent dont l'indice de réfraction est supérieur à l'indice de réfraction du milieu dans lequel le guide est destiné à être immergé, par exemple l'air. Ainsi, un rayon lumineux introduit dans l'épaisseur de la nappe rencontre les faces supérieure ou inférieure avec un angle d'incidence par rapport à la normale qui est supérieur à un angle limite de réfraction. Le rayon est alors susceptible d'être réfléchi totalement par les faces supérieure et inférieure. Le rayon lumineux est donc guidé dans l'épaisseur de la nappe de guidage par réflexions successives entre les deux faces de guidage,
- la portion de sortie présente une forme galbée. C'est-à-dire la face supérieure et/ou la face inférieure de la portion de sortie est non entièrement contenue dans un plan,
- la face supérieure de la portion de sortie présente une forme cylindrique. Dans ce cas, la directrice de la face supérieure est une portion de courbe,
- la face inférieure de la portion de sortie présente une forme cylindrique. Dans ce cas, la directrice de la face inférieure est une portion de courbe,
- l'épaisseur de la nappe est sensiblement constante en tout point de la portion de sortie. On entend par épaisseur la distance séparant la face supérieure de la portion de sortie et la face inférieure de la portion de sortie mesurée selon un plan perpendiculaire à la face supérieure,
- l'épaisseur de la portion de sortie est sensiblement égale à l'épaisseur du sous-ensemble de collimation,
- le guide présentant un axe optique, dans une section du guide par un plan perpendiculaire à la face supérieure de la portion de sortie passant par l'axe optique, la face supérieure de la portion de sortie est parallèle à la face supérieure du sous-ensemble de collimation,
- dans une section du guide par un plan perpendiculaire à la face supérieure de la portion de sortie passant par l'axe optique, la face inférieure de la portion de sortie est parallèle à la face inférieure du sous-ensemble de collimation,
- la tranche de sortie comporte des moyens de diffusion de la lumière quittant cette tranche de sortie. Le cas échéant, la tranche de sortie peut présenter des stries, des prismes ou des tores,
- le guide comporte une pluralité de sous-ensemble de collimation,
- le guide comporte une unique portion de sortie de lumière et une pluralité portions de raccord, chaque portion de raccord raccordant un des sous-ensembles à la portion de sortie de lumière,
- la face supérieure de la portion de sortie de lumière et la face de sortie se joignant en une arête supérieure de tranche de sortie, la face inférieure de la portion de sortie de lumière et la face de sortie se joignant en une arête inférieure de tranche de sortie, l'arête supérieure de tranche de sortie et/ou l'arête inférieure de tranche de sortie présente un profil galbé et lisse, c'est-à-dire dépourvu de cassure,
- au moins une partie des faces inférieures des sous-ensembles de collimation s'étend dans un même premier plan et au moins une autre partie des faces inférieures des sous-ensembles de collimation s'étend dans un même deuxième plan, les premier et deuxième plans étant distincts.
- les faces inférieures des sous-ensembles s'étendent dans des plans parallèles entre eux,
- les faces inférieures des sous-ensembles s'étendent dans un même plan,
- le guide est monolithique, notamment par moulage d'une matière plastique.

L'invention a également pour objet un dispositif optique, notamment pour véhicule automobile, tel qu'un dispositif d'éclairage ou de signalisation ou d'éclairage de l'intérieur de l'habitacle du véhicule, comportant :
- au moins une source lumineuse,
- au moins un guide de lumière selon l'invention.

Dans un mode de réalisation de l'invention, la source de lumière est une diode électroluminescente.

Si on le souhaite, le dispositif comporte une pluralité de sources lumineuses agencées pour éclairer le guide de lumière.

Avantageusement, chaque source lumineuse est associée à un sous-ensemble différent. C'est-à-dire que chaque sous-ensemble de collimation est apte à recevoir de la lumière émise par une seule des sources lumineuses et à diriger au moins une partie de cette lumière vers la portion de sortie de lumière.

Dans un exemple de mise en oeuvre de l'invention, le dispositif est agencé pour émettre, par la face de sortie du guide de lumière, une lumière d'intensité lumineuse comprise entre 50 candelas et 1200 candelas.

Le dispositif optique peut par exemple remplir une fonction du type **DRL** (*Daytime Running Light* ou Lumière pour la circulation de jour), du type Stop, du type anti-brouillard, du type indicateur de direction ou du type recul.

L'invention pourra être mieux comprise à la lecture de la description détaillée qui va suivre, d'exemples de mise en œuvre non limitatifs de l'invention, et à l'examen du dessin annexé, sur lequel :
- la figure 1 illustre, schématiquement et partiellement, en perspective, un dispositif optique selon un exemple de mise en œuvre de l'invention,
- la figure 2 représente, schématiquement et partiellement, une coupe transversale du dispositif de la figure 1,
- la figure 3 représente, schématiquement et partiellement, en vue de dessus, un sous-ensemble de collimation et une LED du dispositif de la figure 1,
- les figures 4A et 4B représentent, schématiquement et partiellement, des vues en face arrière et en face avant du dispositif de la figure 1, et
- la figure 5 représente, schématiquement et partiellement, une coupe transversale d'un dispositif selon un autre exemple de mise en œuvre de l'invention.

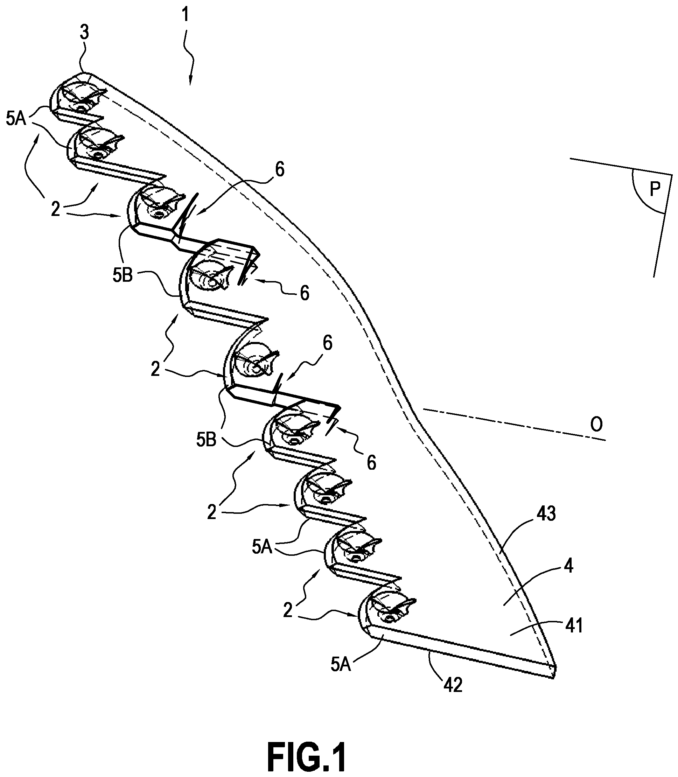

On a représenté sur la figure 1 un dispositif optique 1 pour véhicule automobile, tel qu'un dispositif de signalisation apte à remplir une fonction du type DRL.

Le dispositif optique 1 comporte :
- une pluralité de sources lumineuses 2, chaque source lumineuse 2 étant formée par une diode électroluminescente ou LED,
- un guide de lumière 3 présentant un axe optique O.

Le guide de lumière 3 comporte :
- une portion de sortie de lumière 4 présentant une face supérieure 41 et une face inférieure 42 reliées entre elles par une tranche de sortie de lumière 43,
- une pluralité de sous-ensembles de collimation 5A et 5B, et
- une pluralité de portions de raccord 6 raccordant la portion de sortie de lumière 4 à un sous-ensemble 5B.

Chaque LED 2 est associée à un sous-ensemble 5A ou 5B. C'est-à-dire que chaque sous-ensemble de collimation 5A ou 5B est apte à recevoir de la lumière émise par une LED 2 et à diriger au moins une partie de cette lumière vers la portion de sortie de lumière 4.

Les sous-ensembles 5A et 5B sont tous sensiblement identiques.

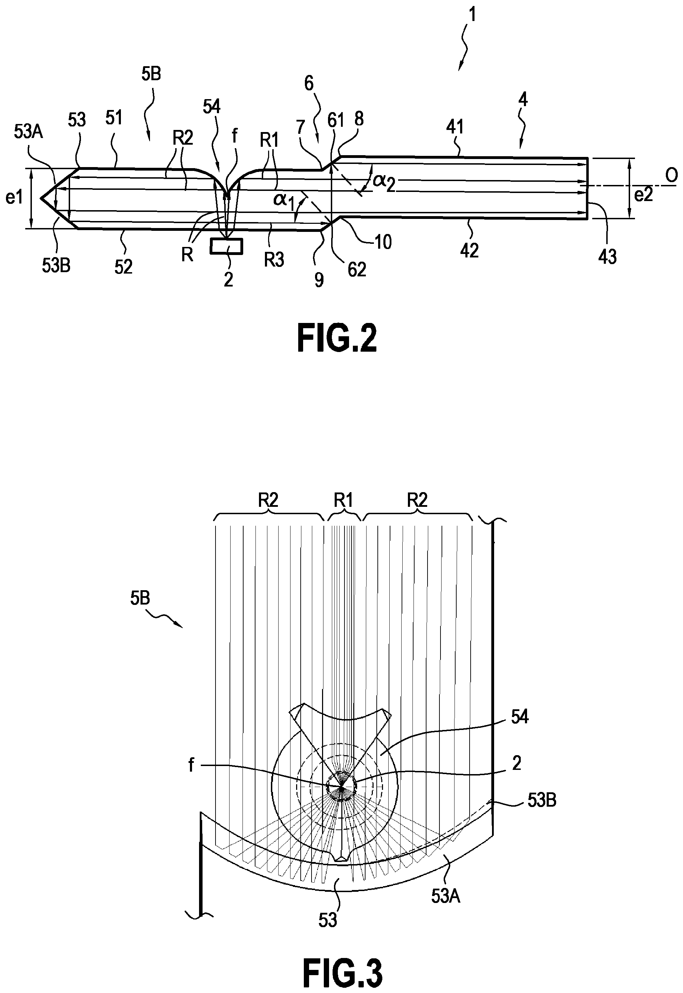

On a représenté en figure 2 une section du dispositif 1 de la figure 1 par un plan P perpendiculaire à la face supérieure 41 du dispositif 1 et contenant l'axe optique O et en figure 3 une vue de dessus d'un sous-ensemble de collimation 5B et d'une LED 2 associée à ce sous-ensemble de collimation 5B du dispositif 1 de la figure 1.

Le sous-ensemble 5B présente une face supérieure 51 et une face inférieure 52 reliées entre elles par une tranche 53.

Les faces inférieure 52 et supérieure 51 du sous-ensemble 5B s'étendent sensiblement dans des plans parallèles entre eux.

La face inférieure 52 du sous-ensemble de collimation 5B est une face d'entrée de lumière 52 apte à recevoir de la lumière émise par la LED 2 lorsque cette LED 2 est disposée sous le sous-ensemble de collimation 5B.

La face supérieure 51 du sous-ensemble de collimation 5B comporte un coupleur 54 agencé de manière à ce que, lorsque la LED 2 est disposée à la verticale de ce coupleur 54 et lorsque des rayons R sont émis d'un point de cette LED 2, traversent la face d'entrée 52 et arrivent sur ce coupleur 54, une partie R1 de ces rayons R sont réfléchis par le coupleur 54 en un faisceau à rayons sensiblement parallèles R1 vers la portion de raccord 6 et une autre partie R2 de ces rayons sont réfléchis par le coupleur 54 vers la tranche 53 du sous-ensemble de collimation 5B.

La tranche 53 du sous-ensemble de collimation 5B est une face de réflexion présentant une section de forme parabolique dans un plan parallèle à la face supérieure 51 du sous-ensemble 5B. Le foyer f de cette section de forme parabolique est disposé au niveau du coupleur 54. De cette manière, le coupleur 54 transmet la partie R2 de la lumière à la tranche 53 du sous-ensemble 5 qui la redirige, sous la forme d'un faisceau à rayons sensiblement parallèles R2, vers la portion de raccord 6.

De plus, la tranche 53 du sous-ensemble de collimation 5B est formée par deux surfaces 53A et 53B formant entre elles un angle de 90°. Ces deux surfaces 53A et 53B peuvent ainsi fonctionner en réflexion interne totale des rayons lumineux R2.

La portion de raccord 6 présente une face supérieure plane 61 et une face inférieure plane 62. Ces faces supérieure 61 et inférieure 62 sont parallèles entre elles.

La face supérieure 61 de la portion de raccord 6 et la face supérieure 51 du sous-ensemble de collimation 5B se joignent en une première arête 7, et la face supérieure 61 de la portion de raccord 6 et la face supérieure 41 de la portion de sortie 4 se joignent en une deuxième arête 8.

La première arête 7 forme un segment de droite.

La face inférieure 62 de la portion de raccord 6 et la face inférieure 52 du sous-ensemble de collimation 5B se joignent en une troisième arête 9, et la face inférieure 62 de la portion de raccord 6 et la face inférieure 42 de la portion de sortie 4 se joignent en une quatrième arête 10.

La troisième arête 9 forme un segment de droite.

La face inférieure 62 de la portion de raccord 6 est, sur toute sa surface, en vis-à-vis de la face supérieure 61 de la portion de raccord 6. La première arête 7 et la troisième arête 9 sont comprises dans un même plan perpendiculaire au sous-ensemble de collimation, non représenté. La deuxième arête 8 et la quatrième arête 10 sont comprises dans un même cylindre, non représenté, défini par une génératrice translatant sur une directrice, la génératrice étant une droite perpendiculaire au sous-ensemble de collimation et la directrice étant la deuxième arête 8.

La première arête 7 définit le sommet d'un angle formé par la face supérieure 61 de la portion de raccord 6 et la face supérieure 51 du sous-ensemble de collimation 5B. Cet angle est égal à 135°.

La deuxième arête 8 définit le sommet d'un angle formé par la face supérieure 61 de la portion de raccord 6 et la face supérieure 41 de la portion de sortie 4. Cet angle est égal à 135°.

La troisième arête 9 définit le sommet d'un angle formé par la face inférieure 62 de la portion de raccord 6 et la face inférieure 52 du sous-ensemble de collimation 5B. Cet angle est égal à 135°.

La quatrième arête 10 définit le sommet d'un angle formé par la face inférieure 62 de la portion de raccord 6 et la face inférieure 42 de la portion de sortie 4. Cet angle est égal à 135°.

Lorsqu'un rayon lumineux R3 des faisceaux à rayons parallèles R1 ou R2 arrive sur la face inférieure 62 de la portion de raccord 6 avec une direction d'incidence α₁ donnée, ce rayon R3 est successivement réfléchi, notamment par réflexion interne totale, par la face inférieure 62 et par la face supérieure 61 vers la portion de sortie de lumière 4 dans une direction de réflexion α₂ sensiblement parallèle à la direction d'incidence α₁.

Grâce à cette caractéristique, les rayons de lumière R1, R2 et R3 se propageant dans le guide passent du sous-ensemble de collimation 5B à la portion de sortie 4 en conservant leur direction.

La portion de sortie de lumière 4 forme une nappe de guidage 4 réalisée en PMMA d'indice de réfraction de 1.49 ou en PC d'indice de réfraction de 1.59.

Dans l'exemple décrit, le guide 3 est monolithique.

Les rayons lumineux R1, R2 et R3 sont guidés dans la nappe 4 vers la tranche de sortie de lumière 43, directement ou par réflexions totales internes successives entre les faces supérieure 41 et inférieure 42 de la nappe 4.

La portion de sortie 4 présente une forme galbée. C'est-à-dire la face supérieure 41 et/ou la face inférieure 42 de la portion de sortie 4 est non entièrement contenue dans un plan.

Dans l'exemple décrit, les faces supérieure 41 et 42 de la portion de sortie 4 présentent chacune une forme cylindrique dont la directrice est une portion de courbe.

L'épaisseur e₁ de la nappe est sensiblement constante en tout point de la portion de sortie et est sensiblement égale à l'épaisseur e₂ des sous-ensembles de collimation 5A et 5B.

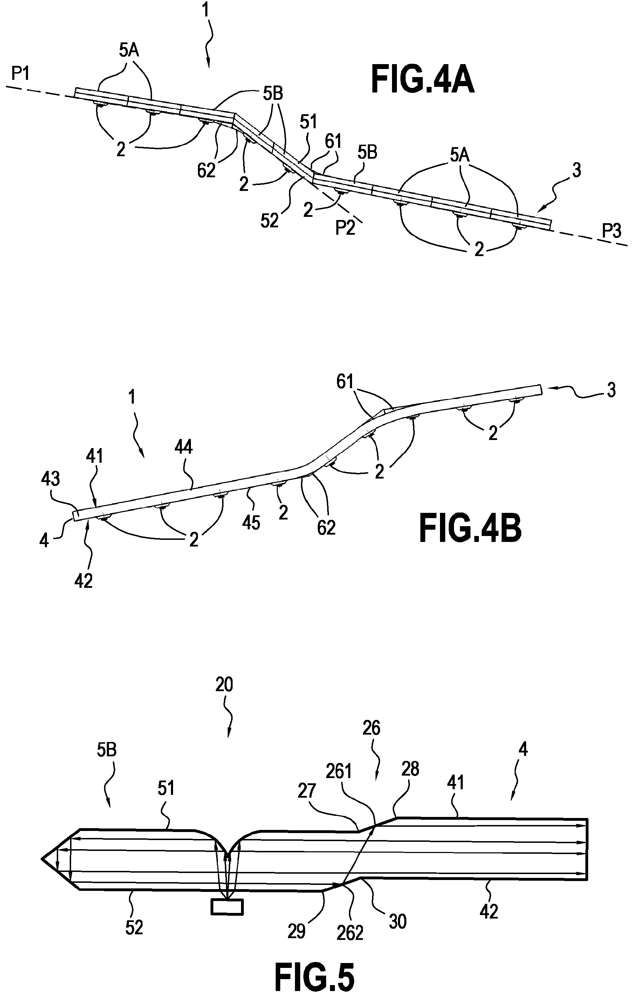

Afin de mieux comprendre l'invention, on a représenté en figure 4A une vue en face arrière du dispositif 1 de la figure 1 et en figure 4B en vue en face avant du dispositif 1 de la figure 1.

Il apparait notamment, sur ces figures 4A et 4B, la planéité des faces supérieure 51 et inférieure 52 des sous-ensembles de collimation 5A et 5B, la courbure de la portion de sortie de lumière 4 du dispositif ainsi que les faces supérieure 61 et inférieure 62 des portions de raccord 6 dans les zones courbées de la portion de sortie 4..

Une première partie des faces inférieures 52 des sous-ensembles de collimation 5A et 5B s'étend dans un même premier plan P1 ; une deuxième partie des faces inférieures 52 des sous-ensembles de collimation 5B s'étend dans un même second plan P2 ; et une troisième partie des sous-ensembles de collimation 5A et 5B s'étend dans un même troisième plan P3.

Le premier plan P1, le deuxième plan P2 et le troisième plan P3 sont distincts.

Le premier plan P1 et le troisième plan P3 sont parallèles entre eux.

La face supérieure 41 de la portion de sortie de lumière 4 et la face de sortie 43 se joignent en une arête supérieure de tranche de sortie 44. La face inférieure 42 de la portion de sortie de lumière 4 et la face de sortie 43 se joignent en une arête inférieure de tranche de sortie 45. L'arête supérieure de tranche de sortie 44 et l'arête inférieure de tranche de sortie 45 présentant un profil galbé et lisse, c'est-à-dire dépourvu de cassure.

Bien entendu, on pourra apporter à l'invention de nombreuses modifications sans sortir du cadre de celle-ci.

On peut, par exemple, remplacer les coupleurs 5A et 5B par d'autres éléments permettant de diriger la lumière émise par les LEDs 2 vers la portion de sortie de lumière 4.

On a représenté en figure 5 une section transversale d'un dispositif 20 selon l'invention, semblable au dispositif 1 des figures 1 et 2, à l'exception de la portion de raccord 26.

La portion de raccord 26 présente une face supérieure plane 261 et une face inférieure plane 262. Ces faces supérieure 261 et inférieure 262 sont parallèles entre elles.

La face supérieure 261 de la portion de raccord 26 et la face supérieure 51 du sous-ensemble de collimation 5B se joignent en une première arête 27, et la face supérieure 261 de la portion de raccord 26 et la face supérieure 41 de la portion de sortie 4 se joignent en une deuxième arête 28.

La première arête 27 forme un segment de droite.

La face inférieure 262 de la portion de raccord 26 et la face inférieure 52 du sous-ensemble de collimation 5B se joignent en une troisième arête 29, et la face inférieure 262 de la portion de raccord 26 et la face inférieure 42 de la portion de sortie 4 se joignent en une quatrième arête 30.

La troisième arête 29 forme un segment de droite.

La face supérieure 261 de la portion de raccord 26 est décalée par rapport à la face inférieure 262 de la portion de raccord 26. La première arête 27 et la troisième arête 29 sont comprises dans un même plan incliné par rapport au sous-ensemble de collimation, non représenté. La deuxième arête 28 et la quatrième arête 30 sont comprises dans un même cylindre, non représenté, défini par une génératrice translatant sur une directrice, la génératrice étant une droite sécante au sous-ensemble de collimation et la directrice étant la deuxième arête.

La première arête 27 définit le sommet d'un angle formé par la face supérieure 261 de la portion de raccord 26 et la face supérieure 51 du sous-ensemble de collimation 5B. Cet angle est égal à 145°.

La deuxième arête 28 définit le sommet d'un angle formé par la face supérieure 261 de la portion de raccord 26 et la face supérieure 41 de la portion de sortie 4. Cet angle est égal à 145°.

La troisième arête 29 définit le sommet d'un angle formé par la face inférieure 262 de la portion de raccord 26 et la face inférieure 52 du sous-ensemble de collimation 5B. Cet angle est égal à 145°.

La quatrième arête 30 définit le sommet d'un angle formé par la face inférieure 262 de la portion de raccord 26 et la face inférieure 42 de la portion de sortie 4. Cet angle est égal à 145°.

## Revendications

1. Guide de lumière (3) pour un dispositif optique, notamment d'éclairage et/ou de signalisation comportant :
- au moins une portion de sortie de lumière (4) présentant une face supérieure (41) et une face inférieure (42) reliées entre elles par une tranche de sortie de lumière (43),
- au moins un sous-ensemble de collimation (5A, 5B) apte à recevoir de la lumière émise par une source de lumière et à diriger au moins une partie de cette lumière vers la portion de sortie de lumière (4), le sous-ensemble de collimation (5A, 5B) présentant une face supérieure (51) et une face inférieure (52) et
- une portion de raccord (6 ; 26) raccordant la portion de sortie de lumière (4) au sous-ensemble (5B), la portion de raccord présentant une face supérieure (61 ; 261) et une face inférieure (62 ; 262),
où la face supérieure (61 ; 261) de la portion de raccord (6 ; 26) et l'une au moins de la face supérieure (51) du sous-ensemble de collimation (5B) et de la face supérieure (41) de la portion de sortie de lumière (4) se joignent en une arête (7, 8 ; 27, 28),
le guide (3) étant **caractérisé en ce que**
la face supérieure (51) et la face inférieure (52) du sous-ensemble de collimation (5A,5B) sont reliées entre elles par une tranche, et
les faces inférieure (52) et supérieure (51) du sous-ensemble de collimation s'étendent sensiblement dans des plans parallèles entres eux, et la portion de sortie de lumière (4) présentant une forme galbée, c'est-à-dire la face supérieure et/ou la face inférieure de la portion de sortie est non entièrement contenue dans un plan.

2. Guide selon la revendication 1, **caractérisé en ce que**, lorsqu'un rayon lumineux (R3) arrive sur la face inférieure (62 ; 262) de la portion de raccord (6 ; 26) avec une direction d'incidence (α₁) donnée, les faces supérieure (61 ; 261) et inférieure (62 ; 262) de la portion de raccord (6 ; 26) sont agencés de manière à réfléchir ce rayon, notamment par réflexion interne totale, vers la portion de sortie de lumière (4) dans une direction de réflexion (α₂) sensiblement parallèle à la direction d'incidence donnée.

3. Guide selon la revendication 1, **caractérisé en ce que**, lorsqu'un rayon lumineux arrive sur la face supérieure (61 ; 261) de la portion de raccord (6 ; 26) avec une direction d'incidence donnée, les faces supérieure (61 ; 261) et inférieure (62 ; 262) de la portion de raccord (6 ;26) sont agencées de manière à réfléchir ce rayon, notamment par réflexion interne totale, vers la portion de sortie de lumière (4) dans une direction de réflexion sensiblement parallèle à la direction d'incidence donnée.

4. Guide selon l'une des revendications précédentes, **caractérisé en ce que** la face supérieure (61 ; 261) de la portion de raccord (6 ; 26) et la face supérieure (51) du sous-ensemble de collimation (5B) se joignent en une première arête (7 ; 27), et **en ce que** la face supérieure (61 ; 261) de la portion de raccord (6 ; 26) et la face supérieure (41) de la portion de sortie de lumière (4) se joignent en une deuxième arête (8 ; 28).

5. Guide selon la revendication précédente, **caractérisé en ce que** :
- la première arête (7 ; 27) définit le sommet d'un angle formé par la face supérieure (61 ; 261) de la portion de raccord (6 ; 26) et la face supérieure (51) du sous-ensemble de collimation (5B), cet angle étant compris entre 130° et 160°, de préférence étant égal à 135°, et/ou
- la deuxième arête définit le sommet d'un angle formé par la face supérieure (61 ; 261) de la portion de raccord (6 ; 26) et la face supérieure (41) de la portion de sortie (4), cet angle étant compris entre 130° et 160°, de préférence étant égal à 135°.

6. Guide selon l'une des revendications précédentes, **caractérisé en ce que** la face inférieure (62 ; 262) de la portion de raccord (6 ; 26) et la face inférieure (52) du sous-ensemble de collimation (5B) se joignent en une troisième arête (9 ; 29), et **en ce que** la face inférieure (62 ; 262) de la portion de raccord (6 ; 26) et la face inférieure (42) de la portion de sortie (4) se joignent en une quatrième arête (10 ; 30).

7. Guide selon la revendication précédente, **caractérisé en ce que** :
- la troisième arête (9 ; 29) définit le sommet d'un angle formé par la face inférieure (62 ; 262) de la portion de raccord (6 ; 26) et la face inférieure (52) du sous-ensemble de collimation (5B), cet angle étant compris entre 130° et 160°, de préférence étant égal à 135°, et/ou
- la quatrième arête (10 ; 30) définit le sommet d'un angle formé par la face inférieure (62 ; 262) de la portion de raccord (6 ; 26) et la face inférieure (42) de la portion de sortie (4), cet angle étant compris entre 130° et 160°, de préférence étant égal à 135°.

8. Guide selon l'une des revendications précédentes, **caractérisé en ce que** la face inférieure (62) de la portion de raccord (6) est, sur toute sa surface, en vis-à-vis de la face supérieure (61) de la portion de raccord (6).

9. Guide selon l'une des revendications 1 à 7, **caractérisé en ce que** la face supérieure (261) de la portion de raccord (26) est décalée par rapport à la face inférieure (262) de la portion de raccord (26).

10. Guide selon l'une des revendications précédentes, **caractérisé en ce que** la face inférieure (52) du sous-ensemble de collimation (5A, 5B) est une face d'entrée de lumière apte à recevoir de la lumière émise par une source de lumière.

11. Guide selon la revendication précédente, **caractérisé en ce que** le sous-ensemble de collimation (51, 5B) comporte des moyens de collimation (54) pour diriger au moins une partie de la lumière provenant de la face inférieure (52) du sous-ensemble de collimation (5A, 5B) vers la portion de raccord (6 ; 26).

12. Guide selon la revendication précédente, **caractérisé en ce que**, lorsque des rayons (R) sont émis d'un point prédéterminé par rapport au guide (3), traversent la face d'entrée (52) et arrivent sur ces moyens de collimation (54), les moyens de collimation (54) sont agencés pour diriger, directement ou indirectement, une majeure partie, notamment la totalité de ces rayons vers la portion de raccord (6 ; 26) sous la forme d'un faisceau à rayons parallèles (R1, R2, R3).

13. Guide selon l'une des revendications précédente, **caractérisé en ce que** la portion de sortie de lumière (4) forme une nappe de guidage agencée pour guider vers la tranche de sortie de la lumière venant de la portion de raccord (6 ; 26) et se propageant dans la nappe, notamment par réflexion interne totale

14. Guide selon l'une des revendications précédentes, **caractérisé en ce qu'**il comporte :
- une pluralité de sous-ensemble de collimation (5A, 5B),
- une unique portion de sortie de lumière (4), et
- une pluralité de portions de raccord (6 ; 26),
chaque portion de raccord (6 ; 26) raccordant un des sous-ensembles de collimation (5B) à la portion de sortie de lumière (4).

15. Guide selon la revendication précédente, **caractérisé en ce que** la face supérieure (41) de la portion de sortie de lumière (4) et la tranche de sortie de lumière (43) se joignent en une arête supérieure (44) de tranche de sortie, **en ce que** la face inférieure (42) de la portion de sortie de lumière (4) et la tranche de sortie (43) se joignent en une arête inférieure (45) de tranche de sortie, l'arête supérieure (44) de tranche de sortie et/ou l'arête inférieure (45) de tranche de sortie présentant un profil galbé et lisse, c'est-à-dire dépourvu de cassure.

16. Guide selon l'une des revendications 14 à 15, **caractérisé en ce qu'**au moins une partie des faces inférieures (52) des sous-ensembles de collimation (5A, 5B) s'étend dans un même premier plan (P1) et qu'au moins une autre partie des faces inférieures (52) des sous-ensembles de collimation (5A, 5B) s'étend dans un même deuxième plan (P2, P3), les premier et deuxième plans étant distincts.

17. Dispositif optique (1), notamment pour véhicule automobile, tel qu'un dispositif d'éclairage ou de signalisation ou d'éclairage intérieur, comportant :
- au moins une source lumineuse (2), notamment une diode électroluminescente,
- au moins un guide de lumière (3) selon l'une des revendications précédentes,
la source de lumière (2) étant agencée pour éclairer le guide de lumière (3).

18. Dispositif selon la revendication précédente, **caractérisé par le fait qu'**il comporte une pluralité de sources de lumières (2) agencées pour éclairer le guide de lumière (3), le guide de lumière comportant une pluralité de sous-ensembles de collimation (5A, 5B), chaque source lumineuse (2) étant associée à un sous-ensemble (5A, 5B) différent.

## Patentansprüche

1. Lichtleiter (3) für eine optische Vorrichtung, insbesondere für Beleuchtung und/oder Signalisierung, umfassend:
- mindestens einen Lichtaustrittsabschnitt (4) mit einer Oberseite (41) und einer Unterseite (42), die durch eine Lichtaustrittskante (43) miteinander verbunden sind,
- mindestens eine Kollimations-Unterbaugruppe (5A, 5B), die geeignet ist, von einer Lichtquelle emittiertes Licht zu empfangen und mindestens einen Teil dieses Lichts in Richtung des Lichtaustrittsabschnitts (4) zu lenken, wobei die Kollimations-Unterbaugruppe (5A, 5B) eine Oberseite (51) und eine Unterseite (52) aufweist, und
- einen Verbindungsabschnitt (6; 26), der den Lichtaustrittsabschnitt (4) mit der Unterbaugruppe (5B) koppelt, wobei der Verbindungsabschnitt eine Oberseite (61; 261) und eine Unterseite (62; 262) aufweist,
wobei die Oberseite (61; 261) des Verbindungsabschnitts (6; 26) und mindestens eine der Oberseiten (51) der Kollimations-Unterbaugruppe (5B) und der Oberseite (41) des Lichtaustrittsabschnitts (4) an einer Kante (7, 8; 27, 28) zusammentreffen,
wobei der Leiter **dadurch gekennzeichnet ist,**
**dass** Oberseite (51) und eine Unterseite (52) der Kollimations-Unterbaugruppe sind durch eine Kante (53) miteinander verbunden, und dass sich die Unterseite (52) und die Oberseite (51) der Kollimations-Unterbaugruppe (5A, 5B) im Wesentlichen in zueinander parallelen Ebenen erstrecken, und
der Lichtaustrittsabschnitt (4) eine gekrümmte Form aufweisend, d. h. die obere Fläche und/oder die untere Fläche des Lichtaustrittsabschnitts nicht vollständig in einer Ebene enthalten ist.

2. Leiter nach Anspruch 1, wobei, wenn ein Lichtstrahl (R3) auf der Unterseite (62; 262) des Verbindungsabschnitts (6; 26) mit einer gegebenen Einfallsrichtung (α1) eintrifft, die Oberseite (61; 261) und die Unterseite (62; 262) des Verbindungsabschnitts (6; 26) so angeordnet sind, dass sie diesen Strahl, insbesondere durch Totalreflexion, in Richtung des Lichtaustrittsabschnitts (4) in einer Reflexionsrichtung (α2) im Wesentlichen parallel zur gegebenen Einfallsrichtung reflektieren.

3. Leiter nach Anspruch 1, wobei, wenn ein Lichtstrahl auf der Oberseite (61; 261) des Verbindungsabschnitts (6; 26) mit einer gegebenen Einfallsrichtung eintrifft, die Oberseite (61; 261) und die Unterseite (62; 262) des Verbindungsabschnitts (6; 26) so angeordnet sind, dass sie diesen Strahl, insbesondere durch Totalreflexion, in Richtung des Lichtaustrittsabschnitts (4) in einer Reflexionsrichtung im Wesentlichen parallel zur gegebenen Einfallsrichtung reflektieren.

4. Leiter nach einem der vorhergehenden Ansprüche, wobei die Oberseite (61; 261) des Verbindungsabschnitts (6; 26) und die Oberseite (51) der Kollimations-Unterbaugruppe (5B) an einer ersten Kante (7; 27) zusammentreffen, und wobei die Oberseite (61; 261) des Verbindungsabschnitts (6; 26) und die Oberseite (41) des Lichtaustrittsabschnitts (4) an einer zweiten Kante (8; 28) zusammentreffen.

5. Leiter nach dem vorhergehenden Anspruch, wobei
- die erste Kante (7; 27) den Scheitelpunkt eines Winkels definiert, der von der Oberseite (61; 261) des Verbindungsabschnitts (6; 26) und der Oberseite (51) der Kollimations-Unterbaugruppe (5B) gebildet wird, wobei dieser Winkel zwischen 130° und 160° liegt und vorzugsweise gleich 135° ist, und/oder
- die zweite Kante den Scheitelpunkt eines Winkels definiert, der von der Oberseite (61; 261) des Verbindungsabschnitts (6; 26) und der Oberseite (41) des Lichtaustrittsabschnitt (4) gebildet wird, wobei dieser Winkel zwischen 130° und 160° liegt und vorzugsweise gleich 135° ist.

6. Leiter nach einem der vorhergehenden Ansprüche, wobei die Unterseite (62; 262) des Verbindungsabschnitts (6; 26) und die Unterseite (52) der Kollimations-Unterbaugruppe (5B) an einer dritten Kante (9; 29) zusammentreffen, und wobei die Unterseite (62; 262) des Verbindungsabschnitts (6; 26) und die Unterseite (42) des Lichtaustrittsabschnitt (4) an einer vierten Kante (10; 30) zusammentreffen.

7. Leiter nach dem vorhergehenden Anspruch, wobei:
- die dritte Kante (9; 29) den Scheitelpunkt eines Winkels definiert, der von der Unterseite (62; 262) des Verbindungsabschnitts (6; 26) und der Unterseite (52) der Kollimations-Unterbaugruppe (5B) gebildet wird, wobei dieser Winkel zwischen 130° und 160° liegt und vorzugsweise gleich 135° ist, und/oder
- die vierte Kante (10; 30) den Scheitelpunkt eines Winkels definiert, der von der Unterseite (62; 262) des Verbindungsabschnitts (6; 26) und der Unterseite (42) des Lichtaustrittsabschnitts (4) gebildet wird, wobei dieser Winkel zwischen 130° und 160° liegt und vorzugsweise gleich 135° ist.

8. Leiter nach einem der vorhergehenden Ansprüche, wobei die Unterseite (62) des Verbindungsabschnitts (6) über ihre gesamte Fläche der Oberseite (61) des Verbindungsabschnitts (6) zugewandt ist.

9. Leiter nach einem der Ansprüche 1 bis 7, wobei die Oberseite (261) des Verbindungsabschnitts (26) relativ zur Unterseite (262) des Verbindungsabschnitts (26) versetzt ist.

10. Leiter nach einem der vorhergehenden Ansprüche, wobei die Unterseite (52) der Kollimations-Unterbaugruppe (5A, 5B) eine Lichteingangsfläche ist, die geeignet ist, von einer Lichtquelle emittiertes Licht zu empfangen.

11. Leiter nach dem vorhergehenden Anspruch, wobei die Kollimations-Unterbaugruppe (51, 5B) Kollimationsmittel (54) zum Lenken mindestens eines Teils des Lichts umfasst, das von der Unterseite (52) der Kollimations-Unterbaugruppe (5A, 5B) ausgeht, in Richtung des Verbindungsabschnitts (6; 26).

12. Leiter nach dem vorhergehenden Anspruch, wobei, wenn Strahlen (R) von einem vorbestimmten Punkt relativ zum Leiter (3) emittiert werden, durch die Eingangsfläche (52) treten und auf diese Kollimationsmittel (54) treffen, die Kollimationsmittel (54) so angeordnet sind, dass sie eine Mehrheit, insbesondere alle, dieser Strahlen direkt oder indirekt in Form eines Strahls mit parallelen Strahlen (R1, R2, R3) in Richtung des Verbindungsabschnitts (6; 26) lenken.

13. Leiter nach einem der vorhergehenden Ansprüche, wobei der Lichtaustrittsabschnitt (4) eine Leitbahn bildet, die so angeordnet ist, dass sie Licht, das vom Verbindungsabschnitt kommt, in Richtung der Lichtaustrittskante leitet,

14. Leiter nach einem der vorhergehenden Ansprüche, wobei der Leiter umfasst:
- eine Vielzahl von Kollimations-Unterbaugruppen (5A, 5B),
- einen einzelnen Lichtaustrittsabschnitt (4) und
- eine Vielzahl von Verbindungsabschnitten (6; 26),
wobei jeder Verbindungsabschnitt (6; 26) eine der Kollimations-Unterbaugruppen (5B) mit dem Lichtaustrittsabschnitt (4) koppelt.

15. Leiter nach dem vorhergehenden Anspruch, wobei die Oberseite (41) des Lichtaustrittsabschnitts (4) und die Lichtaustrittskante (43) an einer oberen Kante (44) zusammentreffen, wobei die Unterseite (42) des Lichtaustrittsabschnitts (4) und die Lichtaustrittskante (43) an einer unteren Kante (45) zusammentreffen, wobei die obere Kante (44) und/oder die untere Kante (45) ein gekrümmtes und glattes, d. h. ununterbrochenes Profil aufweisen.

16. Leiter nach einem der Ansprüche 15 bis 16, wobei sich mindestens ein Teil der Unterseiten (52) der Kollimations-Unterbaugruppen (5A, 5B) in einer und derselben ersten Ebene (P1) erstreckt und dass sich mindestens ein anderer Teil der Unterseiten (52) der Kollimations-Unterbaugruppen (5A, 5B) in einer und derselben zweiten Ebene (P2, P3) erstreckt, wobei die erste und die zweite Ebene verschieden sind.

17. Optische Vorrichtung (1), insbesondere für ein Kraftfahrzeug, wie z. B. eine Beleuchtungs- oder Signalisierungs- oder Innenbeleuchtungsvorrichtung, umfassend:
- mindestens eine Lichtquelle (2), insbesondere eine Leuchtdiode,
- mindestens einen Lichtleiter (3) nach einem der vorhergehenden Ansprüche,
wobei die Lichtquelle (2) so angeordnet ist, dass sie den Lichtleiter (3) beleuchtet.

18. Vorrichtung nach dem vorhergehenden Anspruch, wobei die Vorrichtung eine Vielzahl von Lichtquellen (2) umfasst, die so angeordnet sind, dass sie den Lichtleiter (3) beleuchten, wobei der Lichtleiter eine Vielzahl von Kollimations-Unterbaugruppen (5A, 5B) umfasst, wobei jede Lichtquelle (2) einer anderen Unterbaugruppe (5A, 5B) zugeordnet ist.

## Claims

1. Light guide (3) for an optical device, notably for lighting and/or signaling, comprising:
- at least one light output portion (4) having a top face (41) and a bottom face (42) linked together by a light output edge (43),
- at least one collimation subassembly (5A, 5B) suitable for receiving light emitted by a light source and for directing at least a part of this light toward the light output portion (4), the collimation subassembly (5A, 5B) having a top face (51) and a bottom face (52), and
- a connecting portion (6; 26) connecting the light output portion (4) to the subassembly (5B), the connecting portion having a top face (61; 261) and a bottom face (62; 262),
wherein the top face (61; 261) of the connecting portion (6; 26) and at least one of the top face (51) of the collimation subassembly (5B) and of the top face (41) of the light output portion (4) meet at an edge (7, 8; 27, 28),
the guide (3) being **characterized in that**
the top face (51) and the bottom face (52) of the collimation subassembly are linked together by an edge (53), and
the bottom (52) and top (51) faces of the collimation subassembly (5A, 5B) extend substantially in mutually parallel planes, and
the light output portion (4) having a curved form, that is, the upper face and/or the lower face of the output portion is not entirely contained within a plane.

2. The guide according to Claim 1, wherein, when a light ray (R3) arrives on the bottom face (62; 262) of the connecting portion (6; 26) with a given direction of incidence (α₁), the top (61; 261) and bottom (62; 262) faces of the connecting portion (6; 26) are arranged in such a way as to reflect this ray, notably by total internal reflection, toward the light output portion (4) in a direction of reflection (α₂) substantially parallel to the given direction of incidence.

3. The guide according to Claim 1, wherein, when a light ray arrives on the top face (61; 261) of the connecting portion (6; 26) with a given direction of incidence, the top (61; 261) and bottom (62; 262) faces of the connecting portion (6;26) are arranged in such a way as to reflect this ray, notably by total internal reflection, toward the light output portion (4) in a direction of reflection substantially parallel to the given direction of incidence.

4. The guide according to one of the preceding claims, wherein the top face (61; 261) of the connecting portion (6; 26) and the top face (51) of the collimation subassembly (5B) meet at a first edge (7; 27), and in that the top face (61; 261) of the connecting portion (6; 26) and the top face (41) of the light output portion (4) meet at a second edge (8; 28).

5. The guide according to the preceding claim, wherein
- the first edge (7; 27) defines the apex of an angle formed by the top face (61; 261) of the connecting portion (6; 26) and the top face (51) of the collimation subassembly (5B), this angle being between 130° and 160°, preferably being equal to 135°, and/or
- the second edge defines the apex of an angle formed by the top face (61; 261) of the connecting portion (6; 26) and the top face (41) of the output portion (4), this angle being between 130° and 160°, preferably being equal to 135°.

6. The guide according to one of the preceding claims, wherein the bottom face (62; 262) of the connecting portion (6; 26) and the bottom face (52) of the collimation subassembly (5B) meet at a third edge (9; 29), and in that the bottom face (62; 262) of the connecting portion (6; 26) and the bottom face (42) of the output portion (4) meet at a fourth edge (10; 30).

7. The guide according to the preceding claim, wherein:
- the third edge (9; 29) defines the apex of an angle formed by the bottom face (62; 262) of the connecting portion (6; 26) and the bottom face (52) of the collimation subassembly (5B), this angle being between 130° and 160°, preferably being equal to 135°, and/or
- the fourth edge (10; 30) defines the apex of an angle formed by the bottom face (62; 262) of the connecting portion (6; 26) and the bottom face (42) of the output portion (4), this angle being between 130° and 160°, preferably being equal to 135°.

8. The guide according to one of the preceding claims, wherein the bottom face (62) of the connecting portion (6) is, over its entire surface, facing the top face (61) of the connecting portion (6).

9. The guide according to one of Claims 1 to 7, wherein the top face (261) of the connecting portion (26) is offset relative to the bottom face (262) of the connecting portion (26).

10. The guide according to one of the preceding claims, wherein the bottom face (52) of the collimation subassembly (5A, 5B) is a light input face suitable for receiving light emitted by a light source.

11. The guide according to the preceding claim, wherein the collimation subassembly (51, 5B) comprises collimation means (54) for directing at least a part of the light originating from the bottom face (52) of the collimation subassembly (5A, 5B) toward the connecting portion (6; 26).

12. The guide according to the preceding claim, wherein, when rays (R) are emitted from a predetermined point relative to the guide (3), pass through the input face (52) and arrive on these collimation means (54), the collimation means (54) are arranged to direct, directly or indirectly, a majority, notably all, of these rays toward the connecting portion (6; 26) in the form of a beam with parallel rays (R1, R2, R3).

13. The guide according to one of the preceding claims, wherein the light output portion (4) forms a guiding sheet arranged to guide, toward the output rim, light coming from the connecting portion (6; 26) and being propagated in the sheet, notably by total internal reflection.

14. The guide according to one of the preceding claims, wherein the guide comprises:
- a plurality of collimation subassemblies (5A, 5B),
- a single light output portion (4), and
- a plurality of connecting portions (6; 26),
each connecting portion (6; 26) connecting one of the collimation subassemblies (5B) to the light output portion (4).

15. The guide according to the preceding claim, wherein the top face (41) of the light output portion (4) and the light output rim (43) meet at a top output rim edge (44), in that the bottom face (42) of the light output portion (4) and the output rim (43) meet at a bottom output rim edge (45), the top output rim edge (44) and/or the bottom output rim edge (45) having a curved and smooth, that is to say unbroken, profile.

16. The guide according to one of Claims 15 to 16, wherein at least a part of the bottom faces (52) of the collimation subassemblies (5A, 5B) extends in one and the same first plane (P1) and that at least one other part of the bottom faces (52) of the collimation subassemblies (5A, 5B) extends in one and the same second plane (P2, P3), the first and second planes being distinct.

17. Optical device (1), notably for a motor vehicle, such as a lighting or signaling or interior lighting device, comprising:
- at least one light source (2), notably a light-emitting diode,
- at least one light guide (3) according to one of the preceding claims, the light source (2) being arranged to light the light guide (3).

18. The device according to the preceding claim, wherein the device comprises a plurality of light sources (2) arranged to light the light guide (3), the light guide comprising a plurality of collimation subassemblies (5A, 5B), each light source (2) being associated with a different subassembly (5A, 5B).
